# FASCICULE DE BREVET EUROPEEN

(11) **EP 2 910 438 B1**
(45) Date de publication et mention de la délivrance du brevet: **21.08.2019**
(21) Numéro de dépôt: 15154304.8
(22) Date de dépôt: 09.02.2015
(51) Int. Cl.: B60S 1/38

(54) **Balai d'essuie-glace comportant un élément chauffant**
Scheibenwischer, der ein Heizelement umfasst
Windscreen-wiper blade comprising a heating element

(30) Priorité: 24.02.2014 FR 1451455
(43) Date de publication de la demande: 26.08.2015
(73) Titulaire: Valeo Systèmes d'Essuyage, 78322 Le Mesnil Saint Denis (FR)
(72) Inventeur: CAILLOT, Gérald, 78720 CERNAY LA VILLE (FR); JARASSON, Jean-Michel, 78321 LE MESNIL SAINT DENIS (FR); IZABEL, Vincent, 91380 CHILLY MAZARIN (FR)
(74) Mandataire: Callu-Danseux, Violaine

(56) Documents cités:
- EP-A2- 2 272 727
- WO-A1-2009/118286
- WO-A1-2012/089552
- US-A1- 2013 193 129

## Description

L'invention est relative à un balai d'essuie-glace comportant un élément chauffant, notamment un balai d'essuie-glace souple ou balai d'essuie-glace plat.

Un balai d'essuie-glace comporte une lame de raclage destinée au nettoyage d'un pare-brise de véhicule automobile.

La lame de raclage est portée par un élément de support. Cet élément de support contient un élément allongé formant vertèbre.

L'élément allongé formant vertèbre présente une face inférieure concave destinée à être tournée en direction du pare-brise d'un véhicule auquel le balai d'essuie-glace est destiné, et une face supérieure opposée à ladite face inférieure concave.

On connaît des dispositifs chauffants pour balai d'essuie-glace comportant un élément chauffant intégré dans le corps du balai d'essuie-glace et s'étendant généralement sur la longueur de celui-ci.

L'élément chauffant permet de faire fondre la glace ou la neige qui peut se former ou s'agglutiner sur le balai d'essuie-glace.

Un tel élément chauffant est particulièrement utile pour équiper des balais d'essuie-glace munis d'une rampe de distribution de liquide de lavage. L'élément chauffant permet dans ce cas de réchauffer la rampe de distribution et en particulier les trous de distribution pour permettre au liquide de lavage de sortir et de laver le pare-brise du véhicule auquel le balai d'essuie-glace est destiné.

Lorsque l'élément chauffant est constitué sous forme d'un film chauffant ou d'un revêtement chauffant, on peut disposer cet élément chauffant par collage ou par un autre moyen d'adhésion sur la face inférieure concave de l'élément allongé formant vertèbre.

Cependant, cet élément allongé formant vertèbre est inséré dans l'élément de support de la lame de raclage.

Cette disposition d'élément chauffant sur la face inférieure concave de l'élément allongé formant vertèbre présente plusieurs inconvénients.

En premier lieu, le contact thermique entre l'élément chauffant et l'élément de support réalisé en matériau souple risque d'endommager, ou de dégrader le matériau souple de l'élément de support, particulièrement dans le cas où cet élément de support est un élément de support à canal plat en contact sur toute sa largeur avec l'élément chauffant.

Ensuite, dans le cas où le chargement thermique du film chauffant doit être augmenté pour obtenir une meilleure efficacité de transfert thermique, le risque de dégradation thermique de l'élément de support augmente encore.

Le document WO 2009/118286 A1 montre un balai d'essuie-glace selon le préambule de la première revendication.

Le document WO 2012/089552 A1 montre un autre balai d'essuie glace avec élément chauffant de l'état de la technique.

Un premier but de l'invention est de remédier aux inconvénients de l'état de la technique connue, en proposant un nouveau balai d'essuie-glace chauffant permettant l'utilisation d'un élément de support, tout en évitant le risque de dégradation thermique de l'élément de support.

Un deuxième but de l'invention est de proposer un nouveau balai d'essuie-glace chauffant, en évitant les risques de dégradation de l'élément de support par la chaleur émise par l'élément chauffant.

Un troisième but de l'invention est de permettre une diminution de la puissance du film chauffant, de manière à minimiser les risques de dégradation de l'élément de support.

L'invention a pour objet un balai d'essuie-glace, notamment pour véhicule automobile, comportant:
- un élément de support d'une lame de raclage,
- au moins un élément allongé formant vertèbre,
- au moins un élément chauffant en contact avec une face inférieure concave de l'élément allongé formant vertèbre, caractérisé en ce que le balai d'essuie-glace comprend un moyen d'espacement agencé pour éviter un contact physique entre l'élément chauffant et l'élément de support.

Selon d'autres caractéristiques alternatives de l'invention :
- le moyen d'espacement est disposé entre l'élément allongé formant vertèbre et l'élément de support.
- l'élément de support de la lame de raclage présente un logement entourant au moins partiellement l'élément allongé formant vertèbre.

On peut prévoir que le moyen d'espacement soit constitué par au moins un épaulement de l'élément de support, et de préférence, deux épaulements latéraux sur l'élément de support afin de supprimer ou de minimiser le contact thermique entre le film chauffant et l'élément de support, sans nuire au bon transfert thermique entre l'élément chauffant et les surfaces à réchauffer du côté de l'élément de support.

Selon des variantes avantageuses de l'invention, le nouveau dispositif chauffant selon l'invention est agencé avec un élément de support à canal plat, sans épaulements latéraux, et n'entraîne pas de diminution de flexibilité du balai d'essuie-glace, tout en évitant les risques de dégradation de l'élément de support par la chaleur émise par l'élément chauffant.

Selon d'autres caractéristiques alternatives de ces variantes avantageuses de l'invention, le moyen d'espacement est distinct de l'élément de support, ainsi :
- le moyen d'espacement est prévu entre l'élément chauffant et l'élément de support à canal plat et à l'intérieur du logement en forme de canal plat entourant au moins partiellement l'élément allongé formant vertèbre, pour éviter un transfert thermique direct entre l'élément chauffant et l'élément de support à canal plat.
- le moyen d'espacement peut être disposé sur la face inférieure concave de l'élément allongé formant vertèbre et séparé de l'élément chauffant.
- le moyen d'espacement prévu entre l'élément chauffant et l'élément de support à canal plat peut être disposé sur l'élément chauffant.
- le moyen d'espacement prévu entre l'élément chauffant et l'élément de support à canal plat peut être intégré à l'élément chauffant et comporte au moins une partie non chauffante, froide ou thermiquement isolante.
- le moyen d'espacement prévu du côté de la face inférieure concave de l'élément allongé peut être constitué par au moins une surépaisseur d'une gaine entourant l'élément allongé formant vertèbre.

L'invention a également pour objet un balai d'essuie-glace chauffant selon l'invention particulier, à savoir un balai d'essuie-glace muni d'une rampe de projection d'un liquide de lavage.

L'invention sera mieux comprise grâce à la description qui va suivre donnée à titre d'exemple non limitatif, en référence aux dessins annexés dans lesquels :
La figure 1 représente schématiquement une vue en perspective d'un premier mode de réalisation de balai d'essuie-glace selon l'invention relié à un bras d'actionnement.
La figure 2 représente schématiquement une vue en coupe du balai d'essuie-glace selon l'invention de la figure 1.
La figure 3 représente schématiquement une vue en coupe d'un deuxième mode de réalisation de balai d'essuie-glace selon l'invention.
La figure 4 représente schématiquement une vue en coupe d'un troisième mode de réalisation de balai d'essuie-glace selon l'invention.
La figure 5 représente schématiquement une vue en coupe d'un quatrième mode de réalisation de balai d'essuie-glace selon l'invention.

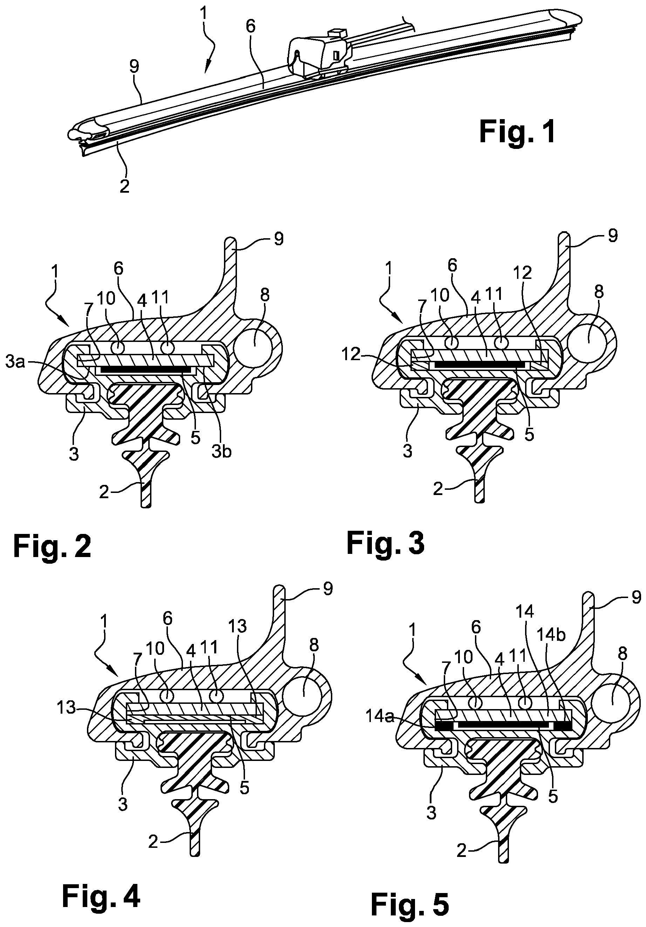

En référence aux figures 1 à 5, les éléments identiques ou fonctionnellement équivalents sont repérés par des chiffres de référence identiques.

Sur les figures 1 et 2, un premier mode de réalisation de balai d'essuie-glace selon l'invention, désigné dans son ensemble par la référence (1), est avantageusement un balai d'essuie-glace souple ou balai d'essuie-glace plat, présentant une grande flexibilité.

Ce balai d'essuie-glace souple (1) comporte une lame de raclage (2), généralement en élastomère, destinée au nettoyage d'un pare-brise de véhicule automobile, auquel le balai d'essuie-glace est destiné.

La lame de raclage (2) en élastomère est portée par un élément (3) de support. L'élément (3) de support comporte deux épaulements (3a, 3b) et contient un élément allongé formant vertèbre (4).

Un élément chauffant (5) constitué sous forme de film ou de revêtement est disposé sur la face inférieure concave de l'élément (4) allongé formant vertèbre.

Un élément (6) de couverture est fixé sur l'élément (3) de support par encliquetage.

L'élément (6) de couverture peut comporter une rampe (8) de projection de liquide de lavage et/ou un déflecteur (9) aérodynamique permettant de plaquer la lame (2) de raclage contre une vitre non représentée d'un véhicule non représenté.

L'invention s'étend également à toute variante d'élément de couverture comportant ou non des déflecteurs aérodynamiques et comportant ou non des rampes de projection de liquide de lavage.

L'élément (4) formant vertèbre est inséré dans un logement (7) ménagé à l'intérieur de l'élément (3) de support.

L'élément (4) formant vertèbre présente sur sa face supérieure deux conducteurs électriques (10, 11) d'alimentation de l'élément chauffant (5) disposé sur sa face inférieure concave.

En d'autres termes, les conducteurs électriques (10, 11) sont disposés sur une face de l'élément (4) allongé formant vertèbre opposée à la face recevant l'élément chauffant (5).

Grâce aux épaulements (3a, 3b), le film chauffant (5) est écarté de l'élément de support (3), de façon à éviter une dégradation thermique de l'élément de support (3) lorsque le film chauffant (5) est alimenté électriquement par les conducteurs (10 et 11).

La présence des épaulements (3a, 3b) augmente légèrement la rigidité de l'élément (3) de support, de sorte que le placage sur une vitre de véhicule est moins accentué, en particulier dans le cas d'un pare-brise bombé ou de déplacements à grande vitesse.

On peut envisager de supprimer les épaulements (3a, 3b) de l'élément de support (3) pour adopter une forme en canal plat, ne présentant pas d'épaulement intérieur, afin de conserver une plus grande flexibilité à l'élément (3) de support.

L'invention s'applique par conséquent également à des éléments de support dont le logement (7) présente une structure en canal plat, sans aucun épaulement du genre des épaulements (3a, 3b).

Cette structure en canal plat, sans aucun épaulement, est similaire à celle des éléments de support des balais d'essuie-glace souple selon l'invention ne comportant pas d'élément chauffant.

Sur la figure 3, un deuxième mode de réalisation de balai d'essuie-glace selon l'invention comporte des éléments identiques ou fonctionnellement équivalents aux éléments des figures 1 et 2.

La lame de raclage (2), généralement en élastomère, est portée par un élément (3) de support.

L'élément (3) de support contient un élément allongé formant vertèbre (4), et un élément chauffant (5) constitué sous forme de film ou de revêtement est disposé sur la face inférieure concave de l'élément (4) allongé formant vertèbre.

Un élément (6) de couverture est fixé sur l'élément (3) de support par encliquetage. L'élément (4) formant vertèbre est inséré dans un logement (7) en canal plat ménagé à l'intérieur de l'élément (3) de support.

L'élément (4) formant vertèbre présente sur sa face supérieure deux conducteurs électriques (10 et 11) d'alimentation de l'élément chauffant (5) disposé sur sa face inférieure concave.

Des moyens d'espacement (12) sont prévus et disposés sur la face inférieure concave de l'élément (4) formant vertèbre pour séparer l'élément chauffant (5) de la face interne de l'élément (3) de support.

Ces moyens (12) d'espacement sont avantageusement fixés sous la face inférieure concave de l'élément (4) formant vertèbre et sont constitués par exemple sous forme de bandelettes souples sans contact avec l'élément chauffant (5).

Le fait de séparer les moyens (12) d'espacement de l'élément chauffant (5) permet d'utiliser un matériau souple, non nécessairement résistant à la chaleur transmise par l'élément chauffant (5) en direction de l'élément (3) de support.

Sur la figure 4, un troisième mode de réalisation de balai d'essuie-glace selon l'invention comporte des éléments identiques ou fonctionnellement équivalents aux éléments de la figure 3.

La lame de raclage (2), généralement en élastomère, est portée par un élément (3) de support.

L'élément (3) de support contient un élément formant vertèbre (4).

Un élément chauffant (5) constitué sous forme de film ou de revêtement est disposé sur la face inférieure concave de l'élément (4) allongé formant vertèbre.

Un élément (6) de couverture est fixé sur l'élément (3) de support par encliquetage.

L'élément (4) formant vertèbre est inséré dans un logement (7) en canal plat ménagé à l'intérieur de l'élément (3) de support.

L'élément (4) formant vertèbre présente sur sa face supérieure deux conducteurs électriques (10 et 11) d'alimentation de l'élément chauffant (5) disposé sur sa face inférieure concave.

Des moyens d'espacement (13) disposés sur l'élément chauffant (5) sont prévus pour séparer la partie active du film chauffant (5) de l'élément de support (3).

Les éléments (13) d'espacement peuvent être constitués par des bords froids non chauffants de l'élément chauffant (5), en contact avec l'élément de support (3).

Lesdits moyens d'espacement (13) disposés sur l'élément chauffant (5) peuvent aussi être disposés sur l'élément chauffant (5), en constituant des bords latéraux thermiquement isolants.

Lesdits moyens d'espacement (13) disposés sur l'élément chauffant (5) peuvent aussi être intégrés à l'élément chauffant (5) et peuvent être constitués en bords présentant une faible transmission thermique.

Sur la figure 5, un quatrième mode de réalisation de balai d'essuie-glace selon l'invention comporte des éléments identiques ou fonctionnellement équivalents aux éléments de la figure 4.

La lame de raclage (2), généralement en élastomère, est portée par un élément (3) de support. L'élément (3) de support contient un élément allongé formant vertèbre (4).

Un élément chauffant (5) constitué sous forme de film ou de revêtement est disposé sur la face inférieure concave de l'élément (4) allongé formant vertèbre.

Un élément (6) de couverture est fixé sur l'élément (3) de support par encliquetage.

L'élément (4) formant vertèbre est inséré dans un logement (7) en canal plat ménagé à l'intérieur de l'élément (3) de support. L'élément (4) formant vertèbre présente sur sa face supérieure deux conducteurs électriques (10 et 11) d'alimentation de l'élément chauffant (5) disposé sur sa face inférieure concave. Des moyens d'espacement (14a, 14b) sont prévus pour séparer l'élément chauffant (5) de la face intérieure de l'élément de support (3).

Dans le cas où l'élément (4) formant vertèbre est constitué sous forme d'une lame métallique entourée d'un revêtement en matière plastique, par exemple en polyéthylène téréphtalate (PET), les éléments d'espacement (14a, 14b) peuvent avantageusement être constitués par des surépaisseurs de l'enveloppe en polyéthylène téréphtalate (PET) de l'élément (4) formant vertèbre.

Cette disposition permet le remplacement d'une vertèbre (4) du type usuel par une vertèbre (4) de moindre épaisseur entourée d'un revêtement en polyéthylène téréphtalate présentant des surépaisseurs.

Cette disposition permet ainsi de standardiser la fabrication des pièces entre balais d'essuie-glace du type usuel et balais d'essuie-glace selon l'invention, du fait que les dimensions des autres pièces essentielles telles que balai de raclage (2), élément de support (3) et élément de couverture (6) ne sont pas modifiées. Cette standardisation permet ainsi l'interchangeabilité des pièces et une économie de stock correspondante.

L'invention décrite en référence à plusieurs modes de réalisation particuliers ne leur est nullement limitée, mais couvre au contraire toute modification de forme et toute variante de réalisation dans le cadre des revendications annexées.

## Revendications

1. Balai (1) d'essuie-glace, notamment pour véhicule automobile, comportant:
• un élément de support (3) d'une lame (2) de raclage,
• au moins un élément allongé (4) formant vertèbre,
• au moins un élément chauffant (5) en contact avec une face inférieure concave de l'élément (4) allongé formant vertèbre,
**caractérisé en ce que** le balai (1) d'essuie-glace comprend un moyen d'espacement (3a, 3b, 12, 13, 14a, 14b) agencé pour éviter un contact physique entre l'élément chauffant (5) et l'élément de support (3).

2. Balai (1) d'essuie-glace selon la revendication précédente, **caractérisé en ce que** le moyen d'espacement (3a, 3b, 12, 13, 14a, 14b) est disposé entre l'élément allongé (4) formant vertèbre et l'élément de support (3).

3. Balai (1) d'essuie-glace selon l'une des revendications précédentes, **caractérisé en ce que** l'élément de support (3) de la lame (2) de raclage présente un logement (7) en forme de canal plat entourant au moins partiellement l'élément allongé (4) formant vertèbre.

4. Balai (1) d'essuie-glace selon l'une des revendications précédentes, **caractérisé en ce que** le moyen d'espacement (3a, 3b,) est constitué par au moins un épaulement de l'élément de support (3).

5. Balai (1) d'essuie-glace selon l'une des revendications 1 à 3, **caractérisé en ce que** le moyen d'espacement (12, 13, 14a, 14b) est distinct de l'élément de support (3).

6. Balai (1) d'essuie-glace selon la revendication 5, **caractérisé en ce que** le moyen d'espacement (12, 13, 14a, 14b) est prévu entre l'élément chauffant (5) et l'élément (3) de support et à l'intérieur du logement (7).

7. Balai (1) d'essuie-glace selon l'une des revendications 5 à 6, **caractérisé en ce que** le moyen d'espacement (12) est disposé sur la face inférieure concave de l'élément allongé (4) formant vertèbre et séparé de l'élément chauffant (5).

8. Balai (1) d'essuie-glace selon l'une des revendications 5 à 6, **caractérisé en ce que** le moyen d'espacement (13) prévu entre l'élément chauffant (5) et l'élément de support (3) est disposé sur l'élément chauffant (5).

9. Balai (1) d'essuie-glace selon l'une des revendications 5 à 6, **caractérisé en ce que** le moyen d'espacement (13) prévu entre l'élément chauffant (5) et l'élément de support (3) est intégré à l'élément chauffant (5) et comporte au moins une partie non chauffante, froide ou thermiquement isolante.

10. Balai (1) d'essuie-glace selon l'une des revendications 5 à 6, **caractérisé en ce que** le moyen d'espacement (14a, 14b) prévu du côté de la face inférieure concave de l'élément (4) allongé formant vertèbre est constitué par au moins une surépaisseur d'une gaine entourant l'élément (4) allongé formant vertèbre.

11. Balai (1) d'essuie-glace selon l'une des revendications précédentes, **caractérisé en ce que** les conducteurs électriques (10, 11) sont disposés sur une face de l'élément (4) allongé formant vertèbre opposée à la face recevant l'élément chauffant (5).

12. Balai d'essuie-glace selon l'une quelconque des revendications 1 à 11, comprenant au moins une rampe (8) ou un moyen de projection de liquide de lavage de pare-brise.

## Patentansprüche

1. Wischerblatt (1), insbesondere für ein Kraftfahrzeug, umfassend:
• ein Trägerelement (3) für ein Wischgummi (2),
• mindestens ein rückgratbildendes langgestrecktes Element (4),
• mindestens ein Heizelement (5), das in Kontakt mit einer konkaven Unterseite des rückgratbildenden langgestreckten Elements (4) ist,
**dadurch gekennzeichnet, dass** das Wischblatt (1) Beabstandungsmittel (3a, 3b, 12, 13, 14a, 14b) umfasst, die dazu eingerichtet sind, einen physischen Kontakt zwischen dem Heizelement (5) und dem Trägerelement (3) zu verhindern.

2. Wischerblatt (1) nach dem vorhergehenden Anspruch, **dadurch gekennzeichnet, dass** das Beabstandungsmittel (3a, 3b, 12, 13, 14a, 14b) zwischen dem rückgratbildenden langgestreckten Element (4) und dem Trägerelement (3) angeordnet ist.

3. Wischerblatt (1) nach einem der vorhergehenden Ansprüche, **dadurch gekennzeichnet, dass** das Trägerelement (3) des Wischgummis (2) eine Aufnahme (7) in Form eines flachen Kanals aufweist, die das rückgratbildende langgestreckte Element (4) zumindest teilweise umgibt.

4. Wischerblatt (1) nach einem der vorhergehenden Ansprüche, **dadurch gekennzeichnet, dass** das Beabstandungsmittel (3a, 3b,) durch mindestens eine Schulter des Trägerelements (3) gebildet wird.

5. Wischerblatt (1) nach einem der Ansprüche 1 bis 3, **dadurch gekennzeichnet, dass** das Beabstandungsmittel (12, 13, 14a, 14b) vom Trägerelement (3) verschieden ist.

6. Wischerblatt (1) nach Anspruch 5, **dadurch gekennzeichnet, dass** das Beabstandungsmittel (12, 13, 14a, 14b) zwischen dem Heizelement (5) und dem Trägerelement (3) und im Innern der Aufnahme (7) vorgesehen ist.

7. Wischerblatt (1) nach einem der Ansprüche 5 bis 6, **dadurch gekennzeichnet, dass** das Beabstandungsmittel (12) an der konkaven Unterseite des rückgratbildenden langgestreckten Elements (4) angeordnet ist und vom Heizelement (5) getrennt ist.

8. Wischerblatt (1) nach einem der Ansprüche 5 bis 6, **dadurch gekennzeichnet, dass** das zwischen dem Heizelement (5) und dem Trägerelement (3) vorgesehene Beabstandungsmittel (13) auf dem Heizelement (5) angeordnet ist.

9. Wischerblatt (1) nach einem der Ansprüche 5 bis 6, **dadurch gekennzeichnet, dass** das zwischen dem Heizelement (5) und dem Trägerelement (3) vorgesehene Beabstandungsmittel (13) in das Heizelement (5) integriert ist und mindestens einen nicht heizenden, kalten oder wärmeisolierenden Teil umfasst.

10. Wischerblatt (1) nach einem der Ansprüche 5 bis 6, **dadurch gekennzeichnet, dass** das auf der Seite der konkaven Unterseite des rückgratbildenden langgestreckten Elements (4) vorgesehene Beabstandungsmittel (14a, 14b) durch mindestens eine Überdicke einer das rückgratbildende langgestreckte Element (4) umgebenden Ummantelung gebildet wird.

11. Wischerblatt (1) nach einem der vorhergehenden Ansprüche, **dadurch gekennzeichnet, dass** die elektrischen Leiter (10, 11) auf einer Seite des rückgratbildenden langgestreckten Elements (4) angeordnet sind, die entgegengesetzt zu der das Heizelement (5) aufnehmenden Seite ist.

12. Wischerblatt nach einem der Ansprüche 1 bis 11, umfassend mindestens eine Düse (8) oder ein Mittel zum Sprühen von Scheibenwaschflüssigkeit.

## Claims

1. Windscreen wiper (1), notably for a motor vehicle, comprising:
• a support element (3) for a wiper blade (2),
• at least one spine-forming elongate element (4),
• at least one heating element (5) in contact with a concave bottom face of the spine-forming elongate element (4),
**characterized in that** the windscreen wiper (1) comprises a spacing means (3a, 3b, 12, 13, 14a, 14b) arranged to avoid physical contact between the heating element (5) and the support element (3).

2. Windscreen wiper (1) according to the preceding claim, **characterized in that** the spacing means (3a, 3b, 12, 13, 14a, 14b) is positioned between the spine-forming elongate element (4) and the support element (3).

3. Windscreen wiper (1) according to one of the preceding claims, **characterized in that** the support element (3) of the wiper blade (2) has a flat channel-form housing (7) at least partially surrounding the spine-forming elongate element (4).

4. Windscreen wiper (1) according to one of the preceding claims, **characterized in that** the spacing means (3a, 3b) consists of at least one shoulder of the support element (3).

5. Windscreen wiper (1) according to one of Claims 1 to 3, **characterized in that** the spacing means (12, 13, 14a, 14b) is distinct from the support element (3).

6. Windscreen wiper (1) according to Claim 5, **characterized in that** the spacing means (12, 13, 14a, 14b) is provided between the heating element (5) and the support element (3) and inside the housing (7).

7. Windscreen wiper (1) according to one of Claims 5 or 6, **characterized in that** the spacing means (12) is positioned on the concave bottom face of the spine-forming elongate element (4) and separated from the heating element (5).

8. Windscreen wiper (1) according to one of Claims 5 or 6, **characterized in that** the spacing means (13) provided between the heating element (5) and the support element (3) is positioned on the heating element (5).

9. Windscreen wiper (1) according to one of Claims 5 or 6, **characterized in that** the spacing means (13) provided between the heating element (5) and the support element (3) is incorporated in the heating element (5) and includes at least one non-heating, cold or thermally insulating part.

10. Windscreen wiper (1) according to one of Claims 5 or 6, **characterized in that** the spacing means (14a, 14b) provided on the side of the concave bottom face of the spine-forming elongate element (4) consists of at least one overthickness of a sheath surrounding the spine-forming elongate element (4).

11. Windscreen wiper (1) according to one of the preceding claims, **characterized in that** the electrical conductors (10, 11) are positioned on a face of the spine-forming elongate element (4) opposite the face receiving the heating element (5).

12. Windscreen wiper according to any one of Claims 1 to 11, comprising at least one spray boom (8) or a means for spraying windscreen washing liquid.
